# EUROPÄISCHE PATENTANMELDUNG

(11) **EP 4 012 100 A1**
(43) Veröffentlichungstag der Anmeldung: **15.06.2022**
(21) Anmeldenummer: 21213156.9
(22) Anmeldetag: 08.12.2021
(51) Int. Cl.: E01C 19/38, E02D 3/046, E02D 3/074

(54) **BODENVERDICHTUNGSVORRICHTUNG ZUM VERDICHTEN EINES BODENBEREICHS**

(30) Priorität: 14.12.2020 DE 102020133340
(71) Anmelder: Wacker Neuson Produktion GmbH & Co. KG, 85084 Reichertshofen (DE)
(72) Erfinder: Steffen, Michael, 80796 München (DE)
(74) Vertreter: Otten, Roth, Dobler & Partner mbB Patentanwälte

(57) **Zusammenfassung**

Es wird eine Bodenverdichtungsvorrichtung (1) zum Verdichten eines Bodenbereiches, wobei wenigstens eine von einem elektrischen Antriebsmotor antreibbare Vibrationseinheit (5) und/oder Schwingungseinheit (5) vorgesehen ist, wobei eine wenigstens ein Bodenkontaktelement (4) umfassende Bodenkontakteinheit (3) vorgesehen ist, wobei das Bodenkontaktelement (4) mit dem Bodenbereich in Kontakt ist, wobei die Bodenkontakteinheit (3) wenigstens den elektrischen Antriebsmotor und die Vibrationseinheit (5) und/oder Schwingungseinheit (5) umfasst, wobei wenigstens eine Energieversorgungseinheit (2) zum Versorgen des elektrischen Antriebsmotors mit elektrischer Antriebsenergie vorgesehen ist, vorgeschlagen, die wenigstens teilweise die Nachteile des Standes der Technik verbessert, insbesondere die Flexibilität deutlich erhöht und zugleich wirtschaftlich günstig verwirklicht werden kann. Dies wird erfindungsgemäß dadurch erreicht, dass zwischen dem elektrischen Antriebsmotor der Bodenkontakteinheit (3) und der Energieversorgungseinheit (2) wenigstens eine elektrische Steckvorrichtung (12, 13, 14) zum lösbaren, elektrischen Verbinden des elektrische Antriebsmotors vorgesehen ist und dass zwischen dem Bodenkontaktelement (4) der Bodenkontakteinheit (3) und der Energieversorgungseinheit (2) wenigstens eine Fixiervorrichtung (15) zum lösbaren, mechanischen Fixieren mit der Energieversorgungseinheit (2) vorgesehen ist.

## Beschreibung

Die Erfindung betrifft eine Bodenverdichtungsvorrichtung zum Verdichten eines Bodenbereiches, insbesondere Vibrationsstampfer, Vibrationsplatten oder Walzen, nach dem Oberbegriff des Anspruchs 1.

### Stand der Technik

Bodenverdichtungsvorrichtung zum Verdichten eines Bodenbereiches, wie Vibrationsstampfer, Vibrationsplatten oder Walzen etc., sind bereits allgemein bekannt und seit Jahrzehnten auf diversen Baustellen im Einsatz, z.B. EP 1 097 272. So umfassen vor allem Stampfer oder Vibrationsplatten eine Obermasse mit einem Motor, d.h. im Allgemeinen einen Verbrennungs- oder Elektromotor, und eine dazu relativ bewegliche Untermasse mit dem Stampffuß bzw. der Bodenplatte. Meist wird mittels Federpaketen die Relativbewegung zwischen Ober- und Untermasse gedämpft.

Stampfer oder Vibrationsplatten sind dementsprechend mobil eingesetzte Baugeräte, die üblicherweise über Fliehkraft-Erreger an der Untermasse mechanische Energie in den Boden eintragen und ihn dadurch verschieben und verdichten. Der Antrieb der Fliehkraft-Erreger erfolgt durch Benzin-, Diesel- oder Elektromotoren, die in der Regel auf der gegenüber der Untermasse elastisch verkoppelten Obermasse angeordnet sind.

Die Kraftübertragung von der Antriebsquelle erfolgt durch Keilriemen, Hydrauliksysteme, Biegewellen oder auch durch elektrische Leitungen. Die zur Übertragung der mechanischen Energie von der Antriebsquelle zur Untermasse genutzten, bislang üblichen Keilriemen unterliegen im Betrieb starkem Verschleiß. Hydrauliksysteme sind nur sehr kostenintensiv und mit schlechtem Wirkungsgrad darstellbar.

Aus der Druckschrift DE 2 321 761 A ist jedoch bereits eine Vibrationsplatte bekannt, wobei die Schwingungserregung auf der Boden- bzw. Grundplatte fest fixiert ist, d.h. von der Untermasse umfasst ist, und über elektrische Leitungen mit der Obermasse elastisch verbunden ist. Die Schwingungserregung erfolgt hier mittels zweier Elektro-Antriebsmotoren, die von der Obermasse mit einen Verbrennungsmotor und Brennstofftank sowie mittels einem elektrischen Generator mit elektrischer Energie versorgt werden.

Diese handelsüblichen Bodenverdichtungsmaschinen sind sehr stabil und kompakt gebaut, um den rauen sowie schmutzigen Baustellenbedingungen bzw. den hohen mechanischen Belastungen auch auf Dauer Stand halten zu können. Hierfür sind alle notwendigen Komponenten zu einem stabilen Gesamtgerät zusammengefasst, wobei die Betriebsstoffe wie Benzin, Diesel, geladene Akkus etc. je nach Antriebsart hinzukommen.

Der Einsatz der Vibrationsplatten in unterschiedlichen Umgebungen (Innenraum / Außenbereich) verlangt unterschiedliche Konzepte - Benzin bzw. Diesel für Außenräume, Elektroantriebe für Innenräume. Dementsprechend sind für die verschiedenen Umgebungen jeweils spezielle Maschinen vorzuhalten.

### Aufgabe und Vorteile der Erfindung

Aufgabe der Erfindung ist es demgegenüber, eine Bodenverdichtungsvorrichtung vorzuschlagen, die wenigstens teilweise die Nachteile des Standes der Technik verbessert, insbesondere die Flexibilität deutlich erhöht und zugleich wirtschaftlich günstig verwirklicht werden kann.

Diese Aufgabe wird, ausgehend von einer Bodenverdichtungsvorrichtung der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Bodenverdichtungsvorrichtung dadurch aus, dass zwischen dem elektrischen Antriebsmotor der Bodenkontakteinheit und der Energieversorgungseinheit wenigstens eine elektrische Steckvorrichtung und/oder erste Kupplungsvorrichtung zum lösbaren, elektrischen Verbinden/Kuppeln des elektrische Antriebsmotors vorgesehen ist und dass zwischen dem Bodenkontaktelement der Bodenkontakteinheit und der Energieversorgungseinheit wenigstens eine Fixiervorrichtung und/oder zweite Kupplungsvorrichtung zum lösbaren, mechanischen Fixieren/Kuppeln mit der Energieversorgungseinheit vorgesehen ist.

Mit Hilfe der elektrischen Steckvorrichtung bzw. ersten Kupplungsvorrichtung und der Fixiervorrichtung bzw. zweiten Kupplungsvorrichtung wird in vorteilhafter Weise erreicht, dass die Bodenkontakteinheit als austauschbare und/oder standardisierte Bodenkontakteinheit ausgebildet wird, so dass je nach Bedarf bzw. Rahmenbedingungen unterschiedliche Energieversorgungseinheiten verwendbar/einsetzbar sind. So können unterschiedlichste Bodenverdichtungsvorrichtungen realisiert/ausgebildet werden, die flexibel an unterschiedlichste Anwendungsfälle anpassbar sind.

Vorteilhafterweise ist zwischen der elektrischen Steckvorrichtung bzw. ersten Kupplungsvorrichtung und dem elektrischen Antriebsmotor wenigstens ein elektrisches Kabel, insbesondere ein flexibles Kabel vorgesehen und/oder umfasst die Fixiervorrichtung bzw. zweite Kupplungsvorrichtung wenigstens ein Dämpfungselement, insbesondere ein Feder- und/oder Gummielement. Hiermit kann einerseits für die elektrische Energieübertragung und/oder andererseits für die mechanische Kopplung/Kupplung/Verbindung die durch die Schwingungen/Vibrationen hervorgerufene Relativbewegung zwischen Bodenkontakteinheit und Energieversorgungseinheit in vorteilhafter Weise ausgeglichen werden.

In einer vorteilhaften Ausführungsform der Erfindung kann die elektrische Verbindung/Kupplung mit einem Stecker bzw. mit fest verbundenen/zusammengesteckten Kabeln umgesetzt werden. In einer vorteilhaften alternativen Variante kann die elektrische Verbindung auch z.B. magnetisch und/oder kapazitiv, d.h. sog. "drahtlos" bzw. "kontaktlos", realisiert werden.

Einerseits können die beiden zu verbindenden Komponenten der elektrischen Verbindung bzw. der ersten Kupplungsvorrichtung, z.B. der Stecker und die Buchse, in vorteilhafter Weise magnetisch aneinander haften/halten und/oder andererseits kann der Strom bzw. die elektrische Energie für den Antriebsmotor bzw. für das Bodenmodul mittels der beiden zu verbindenden Komponenten in vorteilhafter Weise über magnetische Kontaktflächen der erfindungsgemäßen Steckvorrichtung bzw. ersten Kupplungsvorrichtung übertragen werden.

Beispielsweise umfasst die Fixiervorrichtung bzw. zweite Kupplungsvorrichtung wenigstens ein Fixierelement, das vorzugsweise als Bolzen, Stift, Schraube, Mutter, Spann- bzw. Klemmelement oder dergleichen ausgebildet ist.

Gegebenenfalls kann die elektrische Energieübertragung/ Energieverbindung und/oder andererseits für die mechanische Kopplung/Kupplung/Verbindung eine Baueinheit vorgesehen werden. Bevorzugt ist jedoch zwischen der elektrischen Steckvorrichtung und der Fixiervorrichtung ein Abstand vorgesehen, so dass die elektrische Steckvorrichtung und die Fixiervorrichtung als separate Baueinheiten/Vorrichtungen ausgebildet sind. Hiermit kann die die elektrische Energieübertragung/-verbindung und die mechanische Kopplung/Kupplung/Verbindung jeweils separat optimiert werden. Dies ist gerade für die hohen mechanischen, dynamischen Belastungen von großem Vorteil, die auf die Fixiervorrichtung bzw. zweite Kupplungsvorrichtung wirken. Auch kann hierdurch bei Bedarf ein vorteilhafter Austausch beschädigter bzw. beeinträchtigter Komponenten vorgenommen werden. Dies verbessert die Lebensdauer und somit auch die Wirtschaftlichkeit der Bodenverdichtungsvorrichtung gemäß der Erfindung in erheblichem Maß.

In einer vorteilhaften Variante der Erfindung weist die Energieversorgungseinheit wenigstens einen Tragrahmen auf, wobei insbesondere am Tragrahmen wenigsten ein Haltegriff zum Halten der Bodenverdichtungsvorrichtung während einer Arbeitsphase angeordnet ist. Dies verbessert die Stabilität und die Handhabbarkeit der erfindungsgemäßen Bodenverdichtungsvorrichtung.

Vorteilhafterweise weisen die Energieversorgungseinheit und/oder der Tragrahmen wenigstens erste Fixiermittel der Fixiervorrichtung und die Bodenkontakteinheit wenigstens zweite Fixiermittel auf, wobei die ersten und die zweiten Fixiermittel lösbar miteinander fixierbar sind. Hiermit wird eine vorteilhafte lösbare Verbindung/Fixierung/Kupplung/Kopplung von Bodenkontakteinheit und Energieversorgungseinheit umsetzbar.

Vorzugsweise sind wenigstens zwei bzw. mehrere erste/zweite Fixiermittel vorgesehen, wobei zwischen den ersten Fixiermitteln bzw. zwischen den zweiten Fixiermitteln (festgelegte und/oder standardisierte) Fixierabstände vorgesehen sind. Hierdurch können diverse bzw. unterschiedliche Energieversorgungseinheiten mit ersten Fixiermitteln verwirklicht werden, die auf die zweiten Fixiermittel bzw. die Bodenkontakteinheit aufgesetzt bzw. an/mit diesen für den Betreib fest verbunden wird.

In einer besonderen Weiterbildung der Erfindung sind die Bodenkontakteinheit als separat handhabbares Bodenmodul und die Energieversorgungseinheit als separat handhabbares, austauschbares Energiemodul ausgebildet. Diese Modularität ermöglicht einen besonders flexiblen Einsatz der erfindungsgemäßen Bodenverdichtungsvorrichtung.

Vorteilhafterweise sind standardisierte bzw. einheitliche elektrische Steckvorrichtungen bzw. erste Kupplungsvorrichtungen und Fixiervorrichtungen bzw. zweite Kupplungsvorrichtungen vorgesehen. Dies erhöht die Wirtschaftlichkeit der Erfindung nochmals. So reduzieren in vorteilhafter Weise Gleichteile bzw. Standardteile für unterschiedlichste Bodenverdichtungsvorrichtungen die Kosten. Lediglich die Energieversorgungseinheiten können in unterschiedlichster Weise ausgebildet werden, z.B. als elektrische Energiequelle bzw. Energieversorgungseinheit oder als mit Brennstoff, insbesondere Diesel oder Benzin oder Erdgas, betriebene Energieversorgungseinheit mit elektrischem Generator und/oder als Brennstoffzelleneinheit (BZ), insbesondere mit Wasserstoff, Methan, Sauerstoff, Luft oder dergleichen betriebene BZ-Module.

Vorzugsweise umfasst die Energieversorgungseinheit wenigstens einen aufladbaren, elektrischen Speicher. So kann der elektrische Speicher, insbesondere Batterie bzw. aufladbarer Akkumulator oder dergleichen, zur Energieversorgung bzw. als elektrische Energiequelle für den/die elektrischen Antriebsmotoren und/oder für weitere/andere elektrische Verbraucher, wie z.B. Starter/Anlasser oder Lampen/Scheinwerfer etc., verwendet werden.

In einer vorteilhaften Variante der Erfindung umfasst die Energieversorgungseinheit wenigstens einen Wechselrichter zum Umwandeln von Gleichspannung in Wechselspannung. Hiermit kann beispielsweise eine Gleichspannung des elektrischen Speichers bzw. Akkus in eine vorteilhafte Wechselspannung des elektrischen Antriebs bzw. Elektromotors umgewandelt werden. So wird die Flexibilität der Bodenverdichtungsvorrichtung gemäß der Erfindung weiter verbessert.

Vorteilhafterweise umfasst die Energieversorgungseinheit wenigstens einen Netzanschlusskabel zum Anschließen an einem Stromnetz. Mit dem vorteilhaften Netzanschluss kann einerseits der elektrische Speicher gefüllt, vorzugsweise mittels eines elektrischen Ladegerätes geladen werden. Andererseits kann der elektrische Antrieb, insbesondere Elektromotor und/oder elektrischer Linearmotor, direkt mit elektrischer Energie versorgt werden, so dass beispielsweise eine elektrische Zwischenspeicherung im Speicher/Akku und/oder eine elektrische Energieerzeugung mittels Verbrennungsmotor mit elektr. Generator oder mittels Brennstoffzelle entbehrlich werden kann oder in Kombination miteinander verwendet werden kann. Demzufolge erhöht auch diese vorteilhafte Maßnahme die Flexibilität der erfindungsgemäßen Bodenverdichtungsvorrichtung.

Vorzugsweise umfasst die Energieversorgungseinheit bzw. das Energiemodul einen sog. "Range Extender" bzw. ein Zusatzgerät. Hiermit kann die Betriebsdauer verlängert werden. Beispielsweise ist ein elektrischer Zusatzspeicher und/oder ein Zusatztank für den Verbrennungsmotor oder die Brennstoffzelle vorhanden und/oder ein zusätzlicher, insbesondere vergleichsweise kleiner Verbrennungsmotor mit zusätzlichem, elektrischem Zusatzgenerator und/oder ein zusätzliches, insbesondere vergleichsweise kleines Brennstoffzellenmodul. Auch dies führt zu einer Verbesserung der Flexibilität der Anwendungsmöglichkeiten.

Beispielsweise wird der sog. "Range Extender" bzw. das Zusatzgerät in Reihe bzw. seriell oder parallel mit der Energieversorgung bzw. den anderen Energieversorgungseinheiten verwendet und/oder elektrisch verschaltet/eingebunden. Dies ermöglicht wiederum eine besondere Anpassungsfähigkeit an unterschiedlichste externe Rahmenbedingungen beim Einsatz der erfindungsgemäßen Bodenverdichtungsvorrichtung.

Grundsätzlich kann von Vorteil sein, dass der Antriebsmotor im Bodenmodul bzw. der Bodenkontakteinheit fest verbaut ist und die Energieversorgung wie z.B. der elektrische Speicher und/oder die Brennkraftmaschine mit dem Energiewandler eine separate, vom Bodenmodul bzw. der Bodenkontakteinheit entfernbare Baueinheit bildet, wobei wenigstens zwischen der Energieversorgung bzw. der Energieversorgungseinheit und dem elektrischen Antriebsmotor eine lösbare Kupplungsvorrichtung vorgesehen ist. Mit Hilfe dieser Maßnahme kann die relativ häufig zu wartende bzw. störanfällige Brennkraftmaschine mit dem Energiewandler ohne großen Aufwand vom Bodenmodul bzw. der Bodenkontakteinheit entfernt und später, ggf. nach Wartung oder Reparatur wieder verbunden werden. Für eine vergleichsweise aufwendige und zeitintensive Wartung bzw. für relativ zeitaufwendige Reparaturen kann gegebenenfalls eine zweite Baueinheit als Ersatz für die zu wartende bzw. zu reparierende Baueinheit ohne großen Aufwand eingesetzt bzw. vorgesehen werden, so dass das Bodenmodul bzw. der Bodenkontakteinheit bereits nach einer vergleichsweise kurzen Umbauphase wieder voll einsatzbereit ist.

So wird hierbei auch gewährleistet, dass beispielsweise bei einem Defekt der Brennkraftmaschine das Bodenmodul bzw. der Bodenkontakteinheit mit dem Antriebsmotor weiter betrieben werden und in vorteilhafter Weise zu einer Werkstätte oder dergleichen gefahren/gebracht werden kann. Anschließend wird gegebenenfalls die defekte Brennkraftmaschine gemäß der Erfindung vergleichsweise schnell durch ein entsprechendes Ersatzaggregat oder durch ein geladenes Akkumodul etc. ausgewechselt. Hierdurch ist das Bodenmodul bzw. der Bodenkontakteinheit sehr schnell wieder uneingeschränkt verwendbar.

In vorteilhafter Weise kann insbesondere mit handelsüblichen Standardkomponenten während dem Betrieb der Brennkraftmaschine gegebenenfalls überschüssige Antriebsenergie zum Aufladen der Energiespeicher verwendet werden. Hierdurch kann z.B. eine separate Beladung der Akkumulatoren in vorteilhafter Weise entfallen.

In einer vorteilhaften Variante der Erfindung ist die Steckvorrichtung als Steck-Kupplungsvorrichtung mit wenigstens einem Stecker und einer Buchse ausgebildet. Entsprechend ausgebildete Steck-Kupplungsvorrichtungen ermöglichen eine besonders einfache bzw. schnelle Verbindung bzw. Lösung der Baueinheit vom bzw. zum Bodenmodul bzw. von/zu der Bodenkontakteinheit. Hierbei kann auf bereits vorhandene, handelsübliche Standardkomponenten für entsprechende elektrische Stecker bzw. Buchsen zurückgegriffen werden, so dass eine vergleichsweise wirtschaftlich günstige Umsetzung der Erfindung realisierbar ist.

Vorteilhafterweise ist die Steckvorrichtung als Energie- und/oder Steuer-Kupplung zum Verkuppeln von Energie- und/oder Steuer-Leitungen bzw. Steuersignalen ausgebildet. Gegebenenfalls werden separate Energie-, Steuerleitungen vorgesehen. Im Allgemeinen werden zur Energieversorgung des Antriebsmotors vergleichsweise große elektrische Spannungen bzw. Ströme verwendet. Dagegen werden zur Steuerung bzw. Regelung der Antriebs-/Verdichtungskomponenten vergleichsweise geringe elektrische Spannungen bzw. Ströme verwendet, z.B. mit Steuerspannungen von ca. 12 oder 24 Volt. Hierfür können entsprechend dimensionierte, separate Leitungen bzw. Kupplungen vorgesehen werden.

In einer besonderen Variante der Erfindung weist die Energieversorgungseinheit bzw. das Energiemodul wenigstens ein Speicherelement zum Speichern eines Brennstoffs bzw. Kraftstoffs der Brennkraftmaschine und/oder eine Anlassvorrichtung zum Starten der Brennkraftmaschine auf. Hiermit ist eine weitgehend autarke Betriebsweise der Energieversorgungseinheit bzw. des Energiemoduls gemäß der Erfindung realisierbar, so dass in vorteilhafter Weise die Wartung bzw. Reparatur der vergleichsweise störungsanfälligen Komponenten der Brennkraftmaschine erfolgen kann. Hierbei kann die weitgehend autarke Energieversorgungseinheit bzw. das Energiemodul separat gehandhabt und/oder deren Funktionsfähigkeit ohne Beeinträchtigung der Bodenkontakteinheit bzw. des Bodenmoduls nahezu vollständig überprüft bzw. durchgecheckt werden.

Vorzugsweise weist die Anlassvorrichtung den elektrischen Speicher bzw. eine separate/spezielle Batterie bzw. Akkumulator zum Speichern elektrischer Energie für den Startvorgang der Brennkraftmaschine auf. Beispielsweise sind wenigstens zwei separate Batterien bzw. Akkumulatoren vorgesehen, wobei ein Akkumulator zum Anlassen bzw. Starten der Brennkraftmaschine und wenigstens der zweite Akkumulator zur Energieversorgung des Antriebsmotors der Bodenkontakteinheit bzw. des Bodenmoduls vorgesehen ist.

Vorteilhafterweise ist die Energieversorgungseinheit bzw. das Energiemodul als autarkes Not-/Stromaggregat ausgebildet.

Hiermit kann in vorteilhafter Weise eine Doppelfunktion der Energieversorgungseinheit bzw. des Energiemoduls realisiert werden. So kann auf einer Baustelle bzw. einem Einsatzort eine erfindungsgemäße Energieversorgungseinheit bzw. das Energiemodul einerseits für die Energieversorgung der Bodenkontakteinheit bzw. des Bodenmoduls verwendet/eingesetzt werden.

Zudem kann die erfindungsgemäße Energieversorgungseinheit bzw. das Energiemodul bei Stillstand bzw. Nicht-Betrieb der Bodenverdichtungsvorrichtung, d.h. der Bodenkontakteinheit bzw. des Bodenmoduls, als autarkes Not-/Stromaggregat für andere Baumaschinen bzw. Baustellengeräte und/oder als Ladestation zum Laden von aufladbaren, elektrischen Speichern bzw. Akkumulatoren

verwendet werden. Hiermit kann eine besonders wirtschaftliche Betriebsweise und Funktion verwirklicht werden.

Gegebenenfalls ist für eine separate Verwendung der erfindungsgemäßen Energieversorgungseinheit bzw. des Energiemoduls als autarkes Not-/Stromaggregat wenigstens ein Bodenrahmen mit Fixiermitteln der Fixiervorrichtung von Vorteil, um in vorteilhafter Weise separat aufgestellt werden zu können, insbesondere auf einer schmutzigen Baustelle. So werden die Fixiermittel der Energieversorgungseinheit bzw. des Energiemoduls in vorteilhafter Weise nicht verschmutzt und/oder beschädigt.

Vorzugsweise ist als Steckvorrichtung gemäß der Erfindung wenigstens eine (werkzeuglos) lösbar verbindbare Verbindungseinheit für einen/den (aufladbaren) elektrischen Speicher vorgesehen, wobei die Steckvorrichtung bzw. Verbindungseinheit wenigstens eine elektrische Kontaktvorrichtung zum (werkzeuglos) lösbar verbindbaren Kontaktieren des (aufladbaren) elektrischen Speichers und wenigstens eine (werkzeuglos) lösbar verbindbare Haltevorrichtung zum (werkzeuglos) lösbar verbindbaren Halten des (aufladbaren) elektrischen Speichers vorzugsweise in einem Gehäuse und/oder Rahmen der Energieversorgungseinheit umfasst.

Mit Hilfe einer derartigen, werkzeuglos lösbar verbindbaren Steckvorrichtung bzw. Verbindungseinheit kann nun bei Bedarf ohne großen Aufwand bzw. ohne Werkzeug der (aufladbare) elektrische Speicher ausgewechselt werden. Dies eröffnet vollkommen neuartige Möglichkeiten des Betriebs der Bodenverdichtungsvorrichtung. So kann in vorteilhafter Weise ein entladener bzw. fast entladener, erster, elektrischer Speicher ausgewechselt werden, wobei ein anderer bzw. zweiter, geladener elektrischer Speicher mittels der erfindungsgemäßen Steckvorrichtung bzw. Verbindungseinheit vorzugsweise werkzeuglos eingebaut bzw. in der Strom- bzw. Energieversorgungseinheit angeschlossen bzw. mit dieser verbunden werden.

So steht wieder unmittelbar und sehr schnell, d.h. ohne längere Ladezeiten, für den Antriebsmotor elektrische Energie zur Verfügung. Dies ist gerade für einen vergleichsweise langen Einsatz bei Rüttlern, Stampfern, Walzen, Vibrationsplatten etc. auf einer Baustelle oder dergleichen von entscheidendem Vorteil. Beispielsweise können mit mehreren, z.B. ca. 5 oder 10 aufgeladenen, auswechselbaren, elektrischen Speichern eine nahezu unbegrenzte Energieversorgung für diese Baugeräte oder dergleichen gewährleistet werden. Dies eröffnet gerade im Baugewerbe für leistungsstarke Bodenverdichtungsvorrichtung bislang nicht realisierbare Anwendungsmöglichkeiten.

Vorteilhafterweise ist eine elektrische Ladevorrichtung zum Laden des aufladbaren, elektrischen Speichers vorgesehen, wobei die Ladevorrichtung wenigstens einen elektrischen und/oder elektronischen Laderegler zum Kontrollieren eines Ladevorganges des aufladbaren, elektrischen Speichers umfasst, wobei der Laderegler als AC/DC-Wandler zum Umwandeln der ersten Wechselspannung in eine Gleichspannung des aufladbaren, elektrischen Speichers ausgebildet ist, wobei die Anschlusseinheit als Wechselspannungseingang des Ladereglers ausgebildet ist. Hiermit kann der aufladbare, elektrische Speicher nicht nur schnell ausgewechselt, sondern auch in vorteilhafter Weise bei Bedarf bzw. bei genügend Zeit, z.B. über Nacht oder über die Mittagspause, etc., aufgeladen werden. Demzufolge kann auf die Bevorratung bzw. Verwendung von mehreren aufladbaren, elektrischen Speichern verzichtet werden. Dies spart u.a. Investitions-/Kosten.

Vorzugsweise weist die Energieversorgungseinheit bzw. das Energiemodul und/oder die Anschlusseinheit wenigstens einen Netzanschluss für eine Netzspannung, z.B. mit ca. 115V bei 60Hz und/oder einphasige Netzspannung mit ca. 230V bei 50Hz und/oder sog. mehrphasiger "Drehstrom" mit ca. 400V bei 50Hz, und/oder einen Niedervoltanschluss, z.B. 24V oder ca. 35 bis 50V wie insb. ca. 42V/48V bei 200Hz auf.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematisch dargestellte erste Vibrationsplatte gemäß der Erfindung und mit einem Verbrennungsmotor mit elektrischem Generator als Energieversorgung eines Bodenmoduls,
- Figur 2: eine schematisch dargestellte zweite Vibrationsplatte gemäß der Erfindung und mit einem Verbrennungsmotor mit elektrischem Generator sowie mit einem Stromwandler als Energieversorgung des Bodenmoduls,
- Figur 3: eine schematisch dargestellte dritte Vibrationsplatte gemäß der Erfindung und mit wenigstens einem elektrischen Speicher sowie optional mit einem Stromwandler als Energieversorgung des Bodenmoduls,
- Figur 4: eine schematisch dargestellte vierte Vibrationsplatte gemäß der Erfindung und mit dem Verbrennungsmotor mit elektrischem Generator sowie mit einem Stromwandler und mit einem elektrischen Speicher als Energieversorgung des Bodenmoduls,
- Figur 5: eine schematisch dargestellte fünfte Vibrationsplatte gemäß der Erfindung und mit wenigstens einem elektrischen Speicher sowie mit einem Netzanschluss und optional mit einem Stromwandler als Energieversorgung des Bodenmoduls,
- Figur 6: eine schematisch dargestellte sechste Vibrationsplatte gemäß der Erfindung und mit einem Stromwandler und mit einem Netzanschluss sowie optional mit einem Stromwandler als Energieversorgung des Bodenmoduls,
- Figur 7: ein schematisch dargestellter erster Stampfer gemäß der Erfindung und mit wenigstens einem elektrischen Speicher sowie optional mit einem Stromwandler als Energieversorgung eines StampferBodenmoduls und
- Figur 8: ein schematisch dargestellter zweiter Stampfer gemäß der Erfindung und mit einem Verbrennungsmotor mit elektrischem Generator sowie optional mit einem Stromwandler als Energieversorgung des Stampfer-Bodenmoduls.

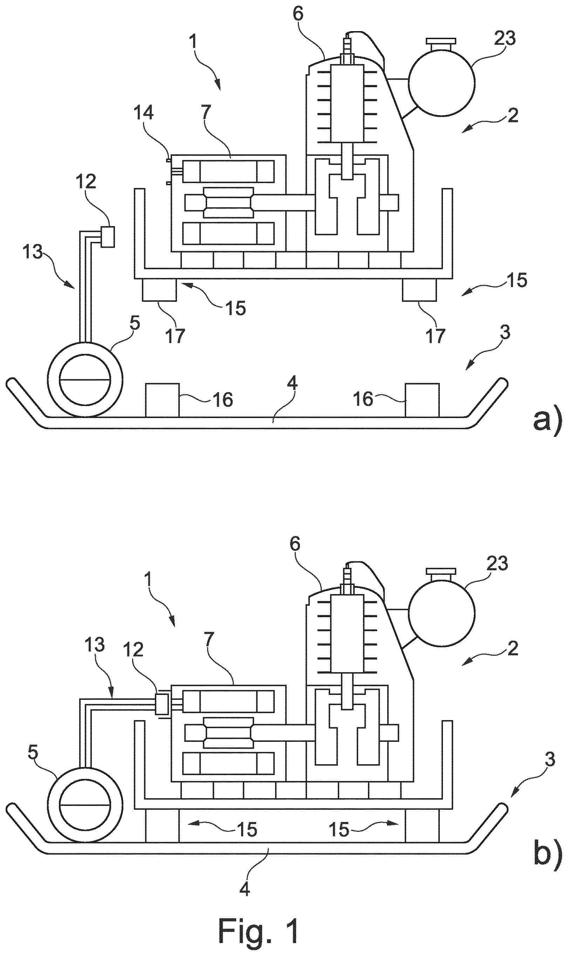

In den Figuren 1 bis 6 sind verschiedene Vibrationsplatten 1 mit unterschiedlichen Energieversorgungsmodulen 2 sowie mit gleichem bzw. identischem Bodenmodul 3 schematisch zum einen im verbundenen Zustand/Betrieb und zum anderen im voneinander gelösten/getrennten Zustand dargestellt.

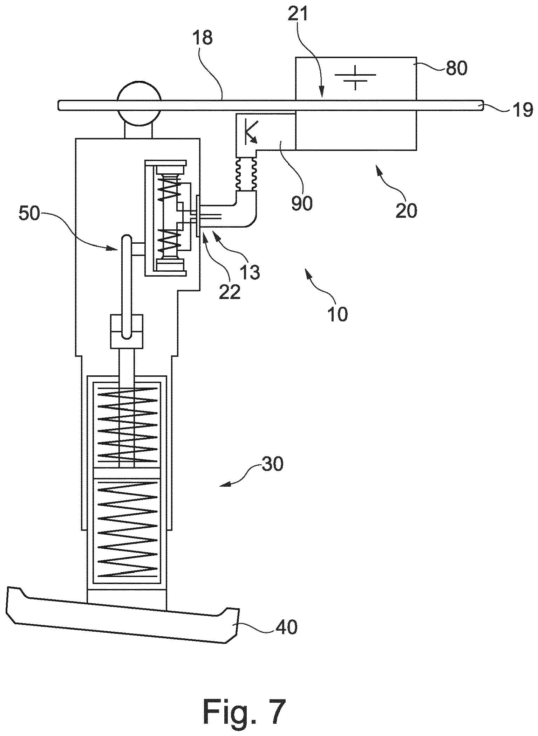

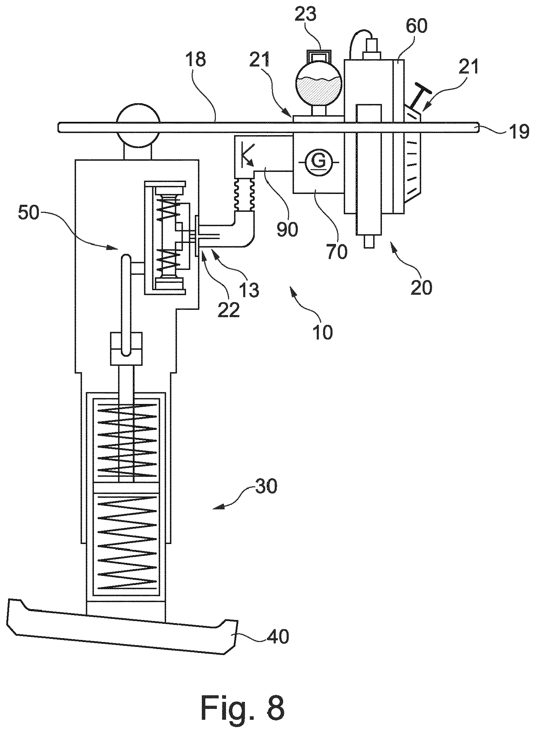

Entsprechend sind in den Figuren 7 und 8 verschiedene Stampfer 10 mit unterschiedlichen Energieversorgungsmodulen 20 sowie mit gleichem bzw. identischem Stampfer-Bodenmodul 30 schematisch zum einen im verbundenen Zustand/Betrieb und zum anderen im voneinander gelösten/getrennten Zustand dargestellt.

So weisen die Bodenmodule 3 bzw. Stampfer-Bodenmodule 30 jeweils eine Bodenplatte 4 bzw. 40 sowie jeweils wenigstens einen Schwingungs- bzw. Vibrationserreger 5 bzw. 50 mit elektrischem Antriebsmotor auf.

Das Bodenmodul 3 der Vibrationsplatten 1 bzw. das Stampfer-Bodenmodul 30 der Stampfer 10 sind jeweils identisch ausgebildet. Lediglich die Energieversorgung bzw. das jeweilige Energieversorgungsmodul 2 bzw. 20 sind unterschiedlich ausgebildet. So kann in vorteilhafter Weise ein Austausch der jeweiligen Energieversorgungsmodule 2 bzw. 20 verwirklicht werden.

Gemäß Figur 1 treibt ein Verbrennungsmotor 6 einen elektrischen Generator 7 an, der elektrische Energie liefert, die geeignet ist, direkt einen Elektromotor des oder der Erreger 5 anzutreiben. Einzelne Erreger 5 oder Kombinationen von mehreren Erregern 5 sind möglich. Optional kann ein Elektromotor als Antrieb des Schwingungserregers 5 auch Teil von diesem Erreger 5 selbst sein.

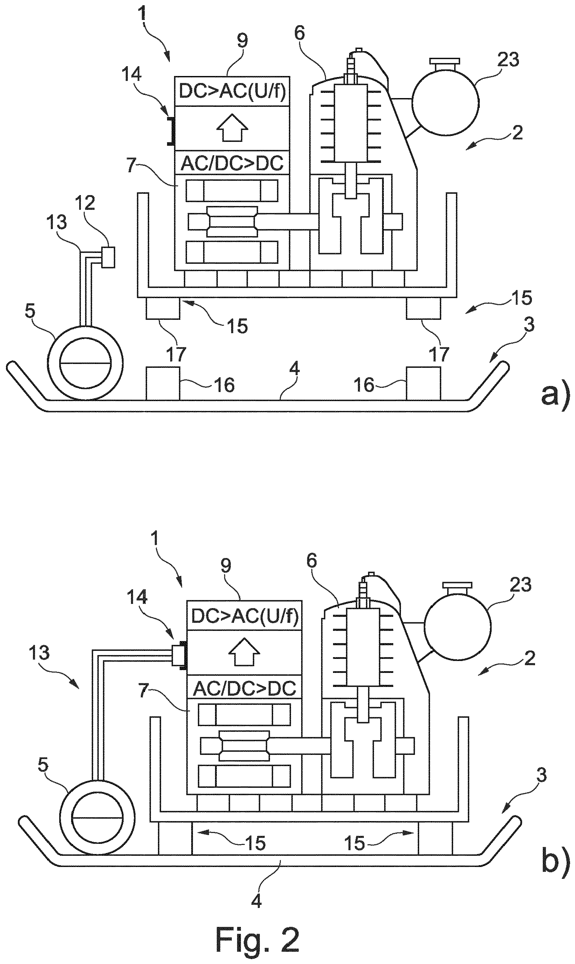

Gemäß Figur 2 treibt ein/der Verbrennungsmotor 6 wiederum einen/den Generator 7 an, der elektrische Energie für den Erreger 5 liefert. Diese Energie wird in eine Elektronik 9 bzw. einen Stromwandler 9, insb. AC-DC-Wandler 9 und/oder DC-AC-Wandler 9 eingespeist. Hierbei wird in vorteilhafter Weise die zum Betrieb des Elektromotors geeignete Stromart, d.h. AC oder DC, bereitstellt. Elektrische Energiespeicher 8 können hierbei zur Zwischen-Speicherung des erzeugten Stromes mit genutzt werden. Einzelne Erreger 5 oder Kombinationen von mehreren Erregern 5 wiederum sind möglich.

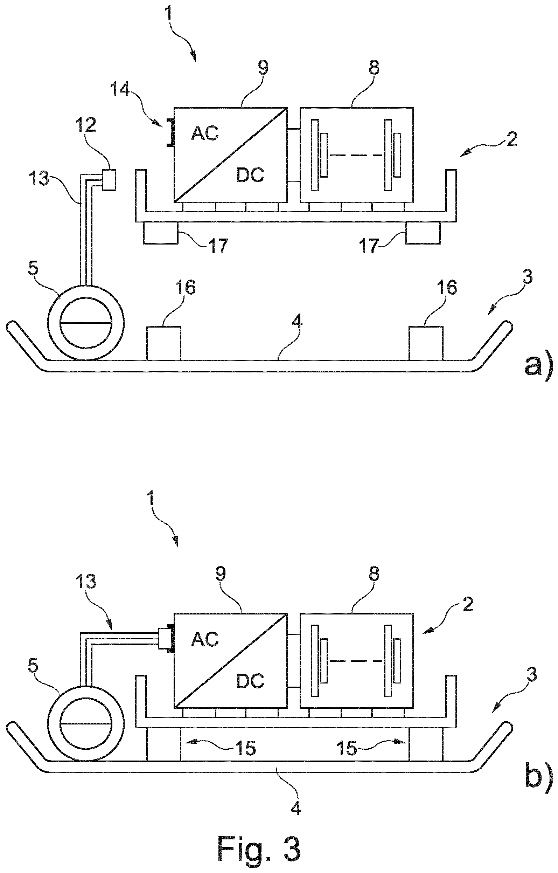

In Figur 3 ist eine weitere Variante der Erfindung mit einem oder mehreren Speichern 8 bzw. Akkus 8 dargestellt. Der Energiespeicher 8 liefert die elektrische Energie in eine Elektronik bzw. einen Stromwandler 9, die zum Betrieb des Elektromotors des Erregers 5 geeignete Stromart bereitstellt.

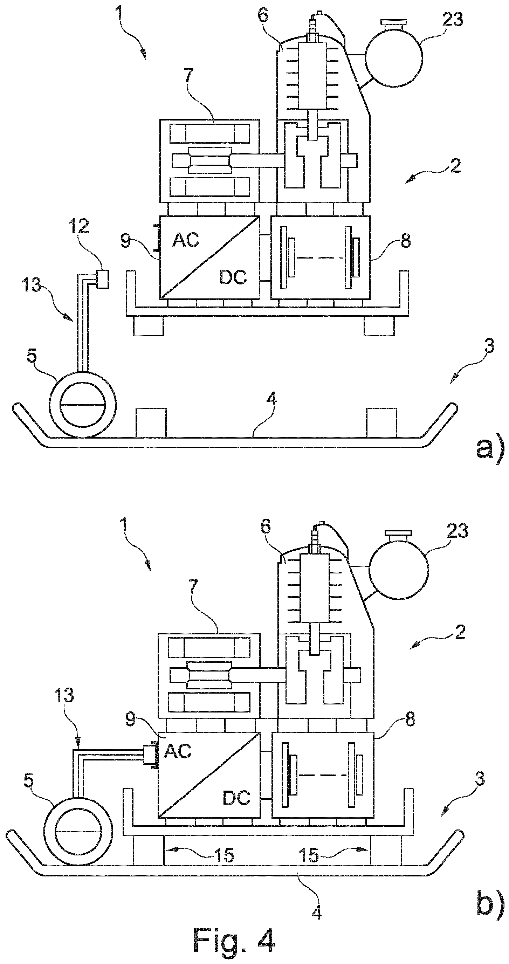

Die Variante gemäß Figur 4 unterscheidet sich zu der Variante gemäß Figur 2 im Wesentlichen dadurch, dass eine zusätzliche Speicherbatterie bzw. ein/der zusätzliche elektrischer Speicher 8 in der Energieversorgungseinheit 2 integriert ist. So weist dieses Energiemodul 2 einen sog. "Range Extender" auf, mit dem eine längere Laufzeit bzw. Betriebsdauer realisierbar ist.

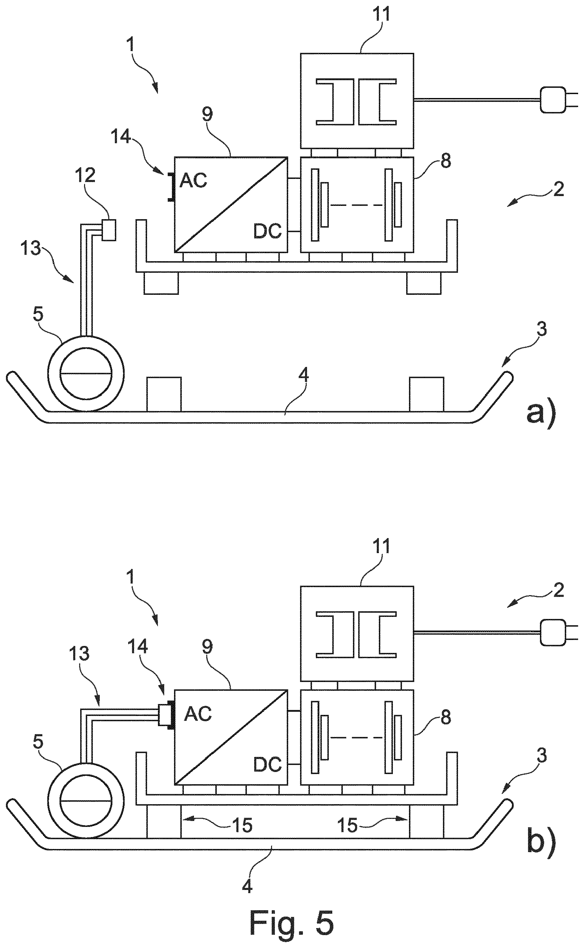

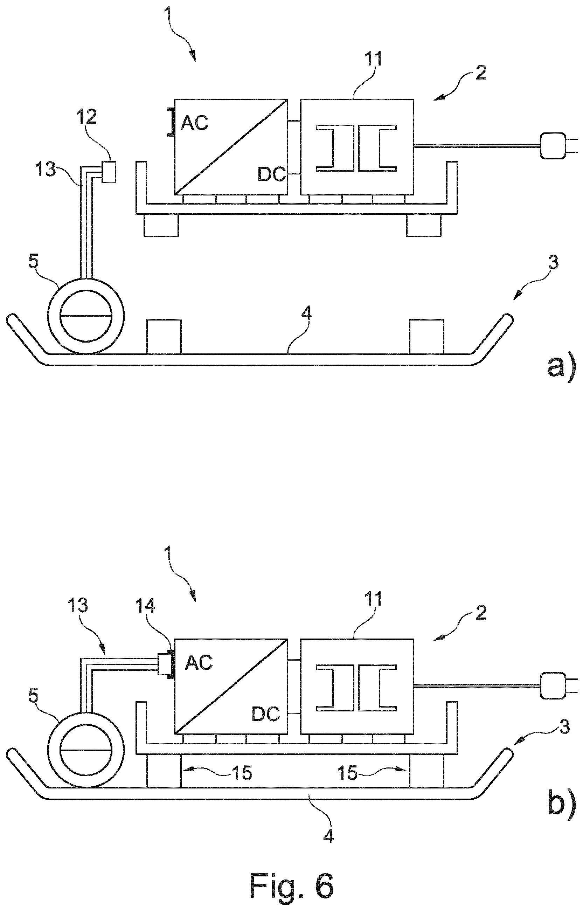

Die Ausführungsbeispiele gemäß den Figuren 5 und 6 weisen in vorteilhafter Weise Netzanschluss 11 auf, um eine Netzversorgung zu realisieren. Hierbei kann ein Aufladen des Speichers 8 bzw. eine Zwischenspeicherung und/oder eine direkte Energieversorgung für den Erreger 5 verwirklicht werden.

Grundsätzlich ist von Vorteil, dass die elektrische Verbindung bzw. eine elektrische Steckvorrichtung 12 bzw. ein elektrisches Kabel 13 mit Stecker 12 des Bodenmoduls 3 in vorteilhafter Weise (werkzeuglos) zu verbinden, beispielsweise in dem der Stecker 12 in eine Buchse 14 des Energiemoduls 2 eingesteckt und wieder ausgesteckt werden kann.

Alternativ oder in Kombination hierzu kann jedoch auch dieses elektrische Verbinden mit Hilfe einer vorteilhaften elektrischen Verbindung bzw. Kupplung nicht nur mit Steckern bzw. auf üblichem Weg mit fest verbundenen/zusammengesteckten Kabeln umgesetzt werden, sondern es kann diese elektrische Verbindung auch z.B. magnetisch und/oder kapazitiv (kontaktlos) realisiert werden. So können die beiden zu verbindenden Komponenten des Steckers/Buchse bzw. der ersten Kupplungsvorrichtung magnetisch aneinander haften/halten und zudem könnte über die magnetischen Kontaktflächen Strom bzw. elektrische Energie für den Antriebsmotor bzw. für das Bodenmodul 3 übertragen werden.

Darüber hinaus wird in vorteilhafter Weise das Bodenmodul 3 mit dem Energiemodul 2 mittels vorzugsweise vier Fixiervorrichtungen 15 bzw. Puffer 15 miteinander lösbar verbunden. Die Puffer 15 weisen hierfür ggf. jeweils zwei Pufferelemente 16 und 17 auf, wobei ein unteres Pufferelement 16 am Bodenmodul 3 fest fixiert ist und ein oberes Pufferelement 17 am Energiemodul 2 fest fixiert ist. Die Puffer 15 bzw. Pufferelemente 16 und 17 weisen gleiche Fixierabstände auf, so dass die unterschiedlichen Energiemodule gemäß den Figuren 1 bis 6 alle mit dem Bodenmodul 3 kompatibel bzw. austauchbar sind.

Eine nicht näher dargestellte Fixierung, z.B. Verschraubung, Verspannung, Verrasterung oder dergleichen zum Fixieren der Puffer 15 bzw. der beiden Pufferelemente 16 und 17 miteinander ist in den Figuren 1 bis 6 lediglich aus Gründen der Übersichtlichkeit nicht näher dargestellt.

So kann gemäß der Erfindung ein flexibles System als Baukasten verwirklicht werden, bei dem möglichst viele Gleichteile die Komplexität und die Kosten der Gesamtmaschine reduzieren. Die dargestellten Maschinen verfügen über gleiche Bodenmodule 3 bzw. Untermassen und elektrische Erreger 5, unabhängig davon welche Antriebsquelle für den Betrieb der Maschine genutzt wird.

Die Erreger 5 können als Antrieb Elektromotoren oder linear arbeitende Erreger 5 besitzen. Zur kompletten Maschine wird sie dadurch, dass im Energiemodul 2 bzw. auf der Obermasse (eine oder mehrere Obermassen sind möglich) eine elektrische Stromquelle verbaut/mitgeführt wird, die die zum Antrieb des Erregermotors geeignete Stromart bereitstellt.

Entsprechend sind in den Figuren 7 und 8 jeweils ein Stampfer 10 dargestellt, wobei das Stampfer-Bodenmodul 30 einen elektrischen Schwingungserreger 50 mit Elektromotor umfasst. Ein Energiemodul 2 umfasst als Alternativen bzw. Tauschmodule entweder gemäß Figur 8 einen Verbrennungsmotor 60 mit Generator 70 und optionalem Wandler 70 oder gemäß Figur 7 einen elektrischen Speicher 80 mit optionalem Wandler 90 zur Energieversorgung des Erregers 50.

Hierbei ist gemäß der Erfindung der Erreger 50 im Bodenmodul 30 fest integriert, ebenso ist hierbei ein Rahmen 18 mit Haltegriff 19 im Bodenmodul 30 integriert. Die mechanische Fixierung bzw. Fixiervorrichtung 21 erfolgt hierbei am Rahmen 18 und die elektrische Steckverbindung 22 mittels der Leitung 13 erfolgt hierbei in vorteilhafter Weise am Erreger 50.

So kann gemäß der Erfindung ein kostengünstiges und ökologisch zukunftsweisendes Baukasten-System für Vibrationsplatten und/oder Stampfer realisiert werden, bei dem die Obermasse der Maschine die mechanische oder elektrische Energiequelle und die Untermasse das Antriebssystem den oder die Schwingungserreger trägt.

Im Fall von mehreren Vibrationserregern 5 können diese in vorteilhafter Weise im Betrieb einzeln an-, ab- und umgeschaltet werden, um die resultierenden Bewegungsvektoren der Maschine in geeigneter Weise zu steuern.

Bei diversen Ausführungsbeispielen der Erfindung sind als besondere Vorteile u.a. zu nennen:
- sehr einfacher und kostengünstiger Aufbau,
- keine Frequenzumformer,
- keine Anlaufsteuerung der Vibrationserreger 5 (wegen Selbsthochlauf der Asynchronmaschine) sowie
- keine Vektorkontrolle (wg. Selbstsynchronisation der Asynchronmaschine im gespeisten Betrieb).

Auch eine Benutzung anderer Motortypen für die Vibrationserreger 5 ist selbstverständlich möglich. Es können z.B. Synchronmaschinen wie der Synchron Reluktanz Motor, der Switched Reluctance Motor oder der BLDC Motor verwendet werden - auch Mischformen wie der Reluktanzmotor, der eine Kombination aus Synchron- und Asynchronmaschine darstellt, sind denkbar. Ebenso sind EC-Motoren, Gleichtrommaschinen und Universalmotoren möglich.

Zudem wird noch erwähnt, dass in Figur 2 beschreibt prinzipiell den gleichen Ansatz wie in Figur 1 schematisch dargestellt ist, jedoch wird die vom Verbrennungsmotor 6 mit Generator 7 erzeugte Stromart über eine Elektronik ganz oder teilweise in eine andere Stromart umgewandelt, welche den Betrieb der angekoppelten Vibrationserreger 5 in vorteilhafter Weise ermöglicht bzw. steuerbar macht.

Figur 3 beschreibt in ähnlicher Weise den Ansatz von Figur 2, wobei die zum Betrieb der Vibrationserreger 5 benötigte Energie nicht von einem Verbrennungsmotor 6 mit Generator 7, sondern von einem oder mehreren auf der Obermasse bzw. dem Energiemodul 2 montierten Energiespeichern 8 mit angeschlossener Elektronik 9 gemäß Figur 2 geliefert wird. Der auf der Obermasse montierte bzw. vorhandene Energiespeicher 8 kann auch entnehmbar ausgeführt sein.

Weiterhin beschreibt Figur 4 eine Variante von Figur 3, jedoch wird zusätzlich ein Stromerzeuger als sog. "Rangeextender" genutzt, um den Energiespeicher 8 bei Bedarf aufzuladen.

Figur 5 beschreibt eine Maschine vergleichbar mit Figur 3, welche an ein Stromnetz anschließbar ist, das die Versorgung der vorab beschriebenen Vibrationserreger 5 mit elektrischer Energie teilweise oder vollständig übernimmt. Es ist dabei auch die Kombination aus Energiespeicher 8 und Ladegerät möglich.

Figur 6 beschreibt eine Maschine wiederum vergleichbar mit Figur 3, welche an ein Stromnetz anschließbar ist, das die Versorgung der vorab beschriebenen Vibrationserreger 5 mit elektrischer Energie übernimmt.

Folglich zeigen die Figuren 1 bis 6 alle auch eine z.B. vom Benutzer der Vibrationsplatte 1 durchführbare Kombination zwischen einer Basismaschine bzw. einem Bodenmodul 3 bzw. elektrischer Untermasse und einer "Energiebox" bzw. Energiemodul 2 als oder in der Obermasse, welche die unter Fig. 1 bis Fig. 6 beschriebenen Energielieferanten beinhaltet. Dadurch entsteht eine Vibrationsplatte 1, welche vom Bediener je nach Arbeitsaufgabe entsprechend in situ ausgerüstet werden kann.

Generell sind weitere vorteilhafte Varianten bzw. Merkmale einzeln und/oder miteinander kombinierbar bzw. realisierbar:
- Kombination unabhängiger Systeme bestehend aus Akku, Wechselrichter, Ladeteil,
- Wechselrichter zur Erzeugung von z.B. 115V / 60 Hz oder 230V/ 50 Hz im Akkublock integriert, wobei der Akkublock weiterhin als mobiler Akku genutzt werden kann,
- Optional mit Ladefunktion für den eigenen oder auch fremde Akkus,
- Kombinationen mit H2-Brennstoffzellen,
- Verwendung von Gleichspannungskomponenten (Akku - Motor),
- Aufteilung der Untermasse in mehrere Untermassen und/oder
- Aufteilung der Obermasse in mehrere Obermassen - auch als 3. Ebene.

### Bezugszeichenliste

- 1: Vibrationsplatte
- 2: Energieversorgungsmodul
- 3: Bodenmodul
- 4: Bodenplatte
- 5: Erreger
- 6: Verbrennungsmotor
- 7: Generator
- 8: Speicher/Akkumulator
- 9: Wandler
- 10: Stampfer
- 11: Netzanschluss
- 12: Stecker
- 13: Leitung/Kabel
- 14: Buchse
- 15: Puffer
- 16: Pufferelement
- 17: Pufferelement
- 18: Rahmen
- 19: Haltegriff
- 20: Energiemodul
- 21: Fixierung
- 22: Verbindung
- 23: Tank
- 30: Bodenmodul
- 40: Bodenplatte
- 50: Erreger
- 60: Verbrennungskraftmaschine
- 70: Generator
- 80: Speicher/Akku
- 90: Wandler

## Patentansprüche

1. Bodenverdichtungsvorrichtung (1, 10) zum Verdichten eines Bodenbereiches, insbesondere Vibrationsstampfer (10), Vibrationsplatten (1) oder Walzen, wobei wenigstens eine von einem elektrischen Antriebsmotor antreibbare Vibrationseinheit (5, 50) und/oder Schwingungseinheit (5, 50) vorgesehen ist, wobei eine wenigstens ein Bodenkontaktelement (4, 40) umfassende Bodenkontakteinheit (3, 30) vorgesehen ist, wobei das Bodenkontaktelement (4, 40) mit dem Bodenbereich in Kontakt ist, wobei die Bodenkontakteinheit (3, 30) wenigstens den elektrischen Antriebsmotor und die Vibrationseinheit (5, 50) und/oder Schwingungseinheit (5, 50) umfasst, wobei der elektrische Antriebsmotor als ein elektrischer Linearmotor oder als ein einen um eine Drehachse rotierbaren Rotor aufweisenden Elektromotor ausgebildet ist, wobei wenigstens eine Energieversorgungseinheit (2, 20) zum Versorgen des elektrischen Antriebsmotors mit elektrischer Antriebsenergie vorgesehen ist, **dadurch gekennzeichnet, dass** zwischen dem elektrischen Antriebsmotor der Bodenkontakteinheit (3, 30) und der Energieversorgungseinheit (2, 20) wenigstens eine elektrische Steckvorrichtung (12, 13, 14, 22) und/oder erste Kupplungsvorrichtung zum lösbaren, elektrischen Verbinden/Kuppeln des elektrische Antriebsmotors vorgesehen ist und dass zwischen dem Bodenkontaktelement (4, 40) der Bodenkontakteinheit (3, 30) und der Energieversorgungseinheit (2, 20) wenigstens eine Fixiervorrichtung (15, 21) und/oder zweite Kupplungsvorrichtung zum lösbaren, mechanischen Fixieren/Kuppeln mit der Energieversorgungseinheit (2, 20) vorgesehen ist.

2. Bodenverdichtungsvorrichtung nach Anspruch 1, **dadurch gekennzeichnet, dass** zwischen der elektrischen Steckvorrichtung (12, 14, 22) und/oder ersten Kupplungsvorrichtung und dem elektrischen Antriebsmotor wenigstens ein elektrisches Kabel (13), insbesondere ein flexibles Kabel (13) vorgesehen ist.

3. Bodenverdichtungsvorrichtung nach einem der vorgenannten Ansprüche, **dadurch gekennzeichnet, dass** zwischen der elektrischen Steckvorrichtung (12, 14, 22) und/oder erste Kupplungsvorrichtung und der Fixiervorrichtung (15, 21) und/oder zweiten Kupplungsvorrichtung ein Abstand vorgesehen ist, so dass die elektrische Steckvorrichtung (12, 14, 22) und/oder erste Kupplungsvorrichtung und die Fixiervorrichtung (15, 21) und/oder zweite Kupplungsvorrichtung als separate Baueinheiten/Vorrichtungen ausgebildet sind.

4. Bodenverdichtungsvorrichtung nach einem der vorgenannten Ansprüche, **dadurch gekennzeichnet, dass** die Energieversorgungseinheit (2, 20) wenigstens einen Tragrahmen (18) aufweist, wobei insbesondere am Tragrahmen (18) wenigsten ein Haltegriff (19) zum Halten der Bodenverdichtungsvorrichtung (1, 10) während einer Arbeitsphase angeordnet ist.

5. Bodenverdichtungsvorrichtung nach einem der vorgenannten Ansprüche, **dadurch gekennzeichnet, dass** die Energieversorgungseinheit (2, 20) und/oder der Tragrahmen (18) wenigstens erste Fixiermittel (17) der Fixiervorrichtung (15, 21) und/oder zweiten Kupplungsvorrichtung und die Bodenkontakteinheit (3, 30) wenigstens zweite Fixiermittel (16) aufweisen, wobei die ersten und die zweiten Fixiermittel (16, 17) lösbar miteinander fixierbar sind.

6. Bodenverdichtungsvorrichtung nach einem der vorgenannten Ansprüche, **dadurch gekennzeichnet, dass** die Bodenkontakteinheit (3, 30) als separat handhabbares Bodenmodul (3, 30) und die Energieversorgungseinheit (2, 20) als separat handhabbares, austauschbares Energiemodul (2, 20) ausgebildet sind.

7. Bodenverdichtungsvorrichtung nach einem der vorgenannten Ansprüche, **dadurch gekennzeichnet, dass** die Energieversorgungseinheit (2, 20) wenigstens einen aufladbaren, elektrischen Speicher (8, 80) umfasst.

8. Bodenverdichtungsvorrichtung nach einem der vorgenannten Ansprüche, **dadurch gekennzeichnet, dass** die Energieversorgungseinheit (2, 20) wenigstens einen Verbrennungsmotor (6, 60), insbesondere Dieselmotor, und/oder Gasmotor und/oder eine Turbine umfasst.

9. Bodenverdichtungsvorrichtung nach einem der vorgenannten Ansprüche, **dadurch gekennzeichnet, dass** die Energieversorgungseinheit (2, 20) wenigstens einen elektrischen Generator (7, 70) zum Umwandeln von Bewegungsenergie in elektrische Energie umfasst.

10. Bodenverdichtungsvorrichtung nach einem der vorgenannten Ansprüche, **dadurch gekennzeichnet, dass** die Energieversorgungseinheit (2, 20) wenigstens einen Wechselrichter (9, 90) zum Umwandeln von Gleichspannung in Wechselspannung umfasst.

11. Bodenverdichtungsvorrichtung nach einem der vorgenannten Ansprüche, **dadurch gekennzeichnet, dass** die Energieversorgungseinheit (2, 20) wenigstens einen Netzanschluss (11) und/oder ein Netzkabel zum Anschließen an einem Stromnetz umfasst.

12. Bodenverdichtungsvorrichtung nach einem der vorgenannten Ansprüche, **dadurch gekennzeichnet, dass** die Energieversorgungseinheit (2, 20) wenigstens eine Brennstoffzelleneinheit zum Erzeugen elektrischer Energie aus einem Brennstofffluid, insbesondere Wasserstoff oder Methan, und einem Oxidationsfluid, insbesondere Sauerstoff und/oder Luft, umfasst.
